# EUROPEAN PATENT APPLICATION

(11) **EP 2 254 024 A1**
(43) Date of publication of application: **24.11.2010**
(21) Application number: 09006867.7
(22) Date of filing: 21.05.2009
(51) Int. Cl.: G06F 3/033

(54) **Device for changing batteries**

(71) Applicant: Giga-Byte Technology Co., Ltd., Taipei 231 (TW)
(72) Inventor: Lin, Yin-Yu, Taipei 231 (TW); Lai, Yen-Bo, Taipei 231 (TW); Chen, Shu-I, Taipei 231 (TW); Chen, Ming-Yuan, Taipei 231 (TW)
(74) Representative: Brandenburger, Karin

(57) **Abstract**

An electronic device includes a housing (1) and a power supply unit (2). The housing (1) has a first side surface (110) and a second side surface (120) on opposite sides thereof and a receiving cavity (10) defined therein, an inlet (11) defined in the first side surface (110) and an outlet (12) defined in the second side surface (120). The receiving cavity (10) is connected with the inlet (11) and the outlet (12). The power supply unit (2) is located in the receiving cavity (10), and a shape of the power supply unit (2) corresponds to that of the receiving cavity (10).

## Description

### BACKGROUND

### 1. Technical Field

The present invention relates to an electronic device, and more particularly to a wireless mouse.

### 2. Description of the Related Art

Typically, a wireless mouse only has an opening for placing or removing a battery. Therefore, if the old battery is replaced, power supply would be interrupted. As such, a new battery can not be mounted until the old battery is taken out firstly.

Taiwan Patent Publication No. I296770 discloses a mouse including an access defined in a side surface thereof provided for a receiver to be received. The receiver has a second battery. However, there are some shortcomings like above in the process when the second battery of the receiver is replaced.

### BRIEF SUMMARY

The present invention provides an electronic device, which includes a housing and a power supply unit. The housing has a first side surface and a second side surface on opposite sides thereof and a receiving cavity defined therein, an inlet being defined in the first side surface and an outlet beingdefined in the second side surface. The receiving cavity is connected with the inlet and the outlet. The power supply unit is located in the receiving cavity, and a shape of the power supply unit corresponds to that of the receiving cavity. In the above electronic device, when a new power supply unit is inserted in the receiving cavity via the inlet, the old power supply unit can be pushed out of the receiving cavity via the outlet by the new power supply unit at the same time. Therefore, the power supply unit can be replaced by a single action/step.

In an embodiment of the present invention, the electronic device further includes a circuit located in the housing. The housing has a first conductive structure formed in the receiving cavity. The power supply unit has a second conductive structure. The first conductive structure corresponds to the second conductive structure. When the power supply unit is pushed out of the receiving cavity by another power supply unit, the first conductive structure and the second conductive structure always keep connection with the circuit. As such, the power supply unit of the electronic device can be replaced without interrupting the power supply.

In an embodiment of the present invention, the electronic device further includes a positioning structure disposed in the housing. The positioning structure can make the power supply unit fixed in the receiving cavity.

### BRIEF DESCRIPTION OF THE DRAWINGS

These and other features and advantages of the various embodiments disclosed herein will be better understood with respect to the following description and drawings, in which like numbers refer to like parts throughout, and in which:

FIG. 1 is a schematic, partly exploded view of an electronic device according to an embodiment of the present invention.

FIG. 2 is a schematic, isometric view of an electronic device according to an embodiment of the present invention.

FIG. 3 is a schematic view of an electronic device according to an embodiment of the present invention, when a power supply unit is replaced.

FIG. 4 is a schematic view of an electronic device according to an embodiment of the present invention, showing replacing a power supply unit without interrupting power supply.

FIG. 5 is a schematic view of a positioning structure of an electronic device according to an embodiment of the present invention.

### DETAILED DESCRIPTION

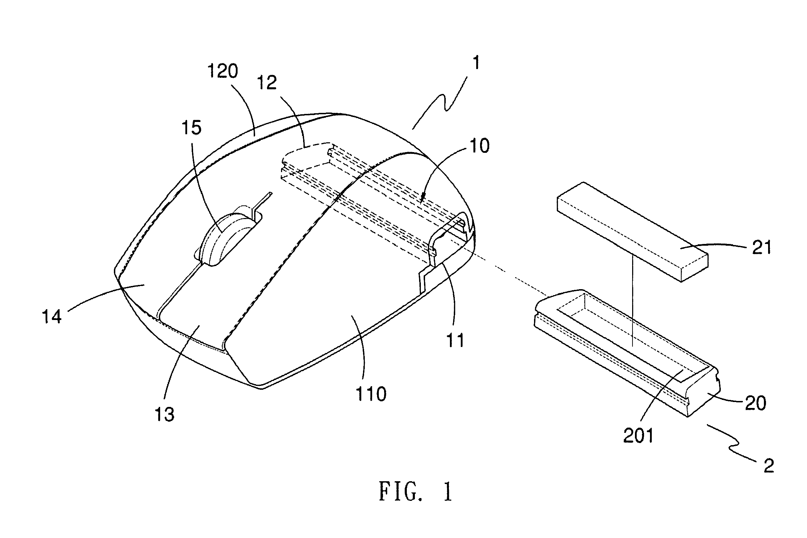

FIGS. 1-5 show an electronic device according to an embodiment of the present invention. The electronic device is a mouse for exemplary purposes, but may be other portable electronic devices that need to replace a battery, such as a mobile phone, a personal digital assistant and an MP3 player.

Referring to FIG. 1, the electronic device includes a housing 1, a power supply unit 2 and a circuit (not shown). The circuit can be a mouse circuit.

The housing 1 defines a receiving cavity 10 therein, and has a first surface 110 and a second surface 120 on opposite sides thereof. An inlet 11 is defined in the first side surface 110, and an outlet 12 is defined in the second surface 120. The receiving cavity 10 is straightly connected with the inlet 11 and the outlet 12. In addition, the housing 1 includes a left button 13, a right button 14 and a wheel 15 in the front of the housing 1. The left button 13, the right button 14 and the wheel 15 are used to control the circuit. The receiving cavity 10 is preferably located adjacent to the back of the housing 1, so that the receiving cavity 10 can stand aside from some mechanisms that are congregated in the front of the housing 1, such as the left button 13, the right button 14, the wheel 15 and the circuit.

In a described embodiment, the power supply unit 2 can includes a battery base 20. The battery base 20 defines a battery groove 201 for receiving at least a battery 21. In an alternative embodiment, the power supply unit 2 can be just a battery.

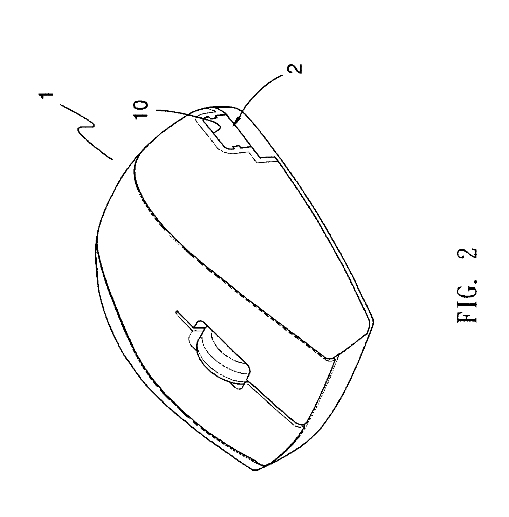

As shown in FIG. 2, the power supply unit 2 has been inserted in the receiving cavity 10 of the housing 10.

Because the power supply unit 2 is connected with the inlet 11 and the outlet 12 and a shape of the power supply unit 2 corresponds to that of the receiving cavity 10, the power supply unit 2 can easily enter the receiving cavity 10 via the inlet 11 and exit from the receiving cavity 10 via the outlet 12.

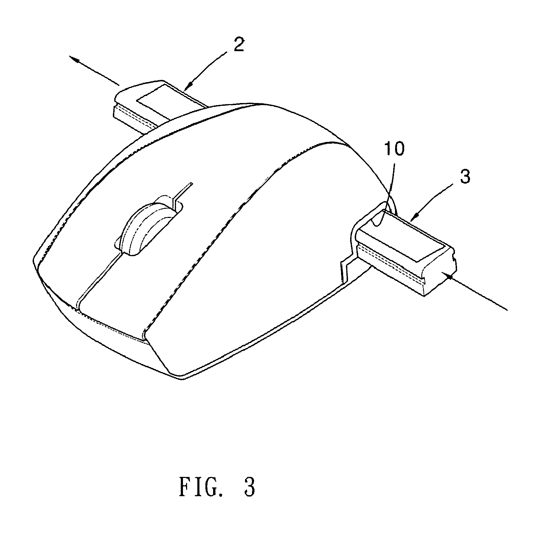

As shown in FIG. 3, another power supply unit 3 (regarding as a new battery) that is same to the power supply unit 2 is used to replace the power supply unit 2 (regarding as an old battery), and the purpose of replacing power supply unit (regarding as the battery) in the electronic device is achieved. In a process of replacing the power supply unit 2, the power supply unit 2 is pushed out of the receiving cavity 10 by the another power supply unit 3, with the another power supply unit 3 entering the cavity 10. In other words, discharging the power supply unit 2 and mounting the power supply unit 3 are carried out at the same time. Therefore, when compared with the traditional process of replacing battery (which includes two steps/actions, firstly, the old battery is taken out firstly, and then the new battery is mounted), the electronic device of the embodiment of the present invention only has a single action/ step for discharging the power supply unit 2 and mounting the another power supply unit 3, and thus the process of the replacing battery of the electronic device of the embodiment of the present invention can be conveniently and easily.

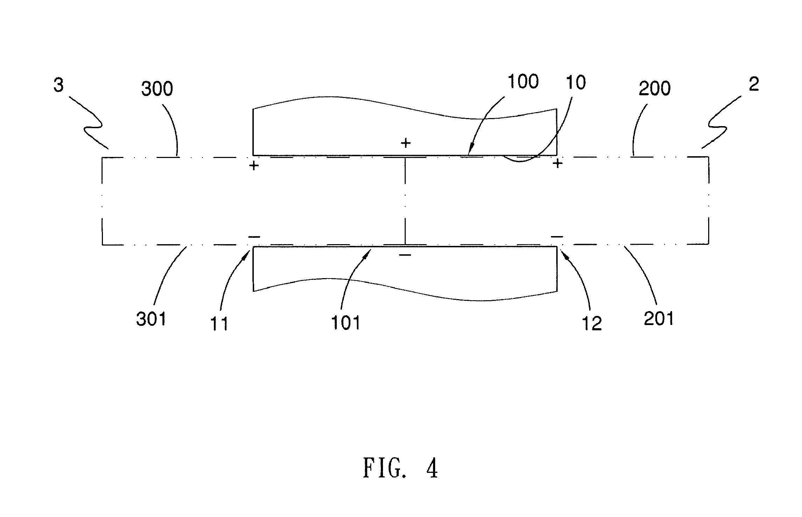

As shown in FIG. 4, the housing 1 has a first conductive structure formed in the receiving cavity 10. The first conductive structure is connected with the circuit, and includes an anode surface 100 and a cathode surface 101. The anode surface 100 and the cathode surface 101 respectively extend from the inlet 11 to the outlet 12. The power supply unit 2 has a second conductive structure on an outer surface of the power supply unit 2. The second conductive structure includes an anode surface 200 and a cathode surface 201. The anode surface 200 and the cathode surface 201 respectively extend from one end to another end of the long edge of the power supply unit 2

After a portion of another power supply unit 3 enters the receiving cavity 10, an anode surface 300 and a cathode surface 301 of the another power supply unit 3 are respectively connected with the anode surface 100 and the cathode surface 101 of the first conductive structure in the receiving cavity 10. Before the power supply unit 2 is pushed out of the receiving cavity 10, the anode surface 200 and the cathode surface 201 of the power supply unit 2 are respectively always connected with the anode surface 100 and the cathode surface 101 of the first conductive structure in the receiving cavity 10. In other words, when the power supply unit 2 is pushed out of the receiving cavity 10 by the another power supply unit 3, the first conductive structure and the second conductive structure always keep connection with the circuit, and the electric power for the electronic device can be supplied by the power supply unit 2 and/or the another power supply unit 3. As such, when the power supply unit 2 is replaced, a power-up state of the electronic device can be kept. That is when the power supply unit 2 is replaced by a user, the electronic device can always work, and thus the electronic device can be used without restarting. In comparison to the traditional process of replacing battery in which the power supply need to be interrupted, the electronic device of the embodiment of the present invention that do not require to interrupt the power supply can be conveniently.

Configuration of the first conductive structure and the second conductive structure of FIG. 4 is an example, and the present invention is not limited herein. For example, the anode surface and the cathode surface can be coplanar, or the anode surface and the cathode surface can be respectively made of a plurality of small surfaces that are discontinuous. It should point out that, whatever the configuration of the first conductive structure and the second conductive structure is, it should satisfy that the power supply unit 2 of the electronic device is replaced without interrupting the power supply.

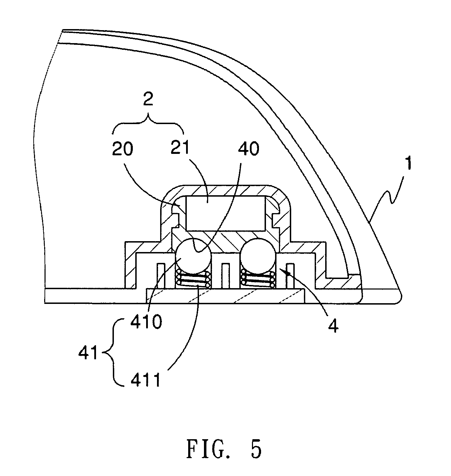

As shown in FIG. 5, the electronic device further includes a positioning structure 4 disposed in the housing 1. The positioning structure 4 can make the power supply unit 2 fixed in the receiving cavity 10. In a described embodiment, the positioning structure 4 includes two shallow arcuate slots 40 disposed at an outer surface of the battery base 20 and two elastic positioning members 41 disposed in the housing 1. The elastic positioning member 41 includes a bead 410 and a compression spring 411. When the battery base 20 is pushed into the receiving cavity 10, the compression spring 411 can keep making the bead 410 resist with the battery base 20, till the battery base 20 arrives at a predetermined location and the compression spring 411 pushes a portion of the bead 410 into the shallow arcuate slot 40 so that the battery base 20 can be fixed in the receiving cavity 10.

The above description is given by way of example, and not limitation. Given the above disclosure, one skilled in the art could devise variations that are within the scope and spirit of the invention disclosed herein, including configurations ways of the recessed portions and materials and/or designs of the attaching structures. Further, the various features of the embodiments disclosed herein can be used alone, or in varying combinations with each other and are not intended to be limited to the specific combination described herein. Thus, the scope of the claims is not to be limited by the illustrated embodiments.

## Claims

1. An electronic device, comprising:
a housing having a first side surface and a second side surface on opposite sides thereof and a receiving cavity defined therein, an inlet being defined in the first side surface, an outlet being defined in the second side surface, and the receiving cavity being connected with the inlet and the outlet; and
a power supply unit located in the receiving cavity, a shape of the power supply unit corresponding to that of the receiving cavity.

2. The electronic device as claimed in claim 1, further comprising a circuit located in the housing, the housing having a first conductive structure formed in the receiving cavity, the power supply unit having a second conductive structure, the first conductive structure corresponding to the second conductive structure, when the power supply unit is pushed out of the receiving cavity by another power supply unit, the first conductive structure and the second conductive structure always keep connection with the circuit.

3. The electronic device as claimed in claim 2, further comprising a positioning structure disposed in the housing, the positioning structure making the power supply unit fixed in the receiving cavity.

4. The electronic device as claimed in claim 3, wherein the power supply unit comprises a battery base defining a groove for receiving at least a battery, the second conductive structure disposed at an outer surface of the battery base.

5. The electronic device as claimed in claim 3, wherein the positioning structure comprises at least a shallow arcuate slot disposed at an outer surface of the power supply unit and an elastic positioning member disposed in the housing, the elastic positioning member including a bead and a compression spring, when the power supply unit is pushed into the receiving cavity, the compression spring keeps making the bead resist with the power supply unit, till the power supply unit arrives at a predetermined location and the compression spring pushes a portion of the bead into the at least a shallow arcuate slot.

6. The electronic device as claimed in claim 2, wherein the housing comprises a left button and a right button, the circuit is a mouse circuit, and the receiving cavity is adjacent to a back of the housing.

7. The electronic device as claimed in claim 1, wherein the receiving cavity is straightly connected with the inlet and the outlet.
